Europäisches Patentamt

European Patent Office

Office européen des brevets

(11) Publication number: **0 226 371 B1**

# EUROPEAN PATENT SPECIFICATION

(45) Date of publication of patent specification: **22.07.92**  (51) Int. Cl.5: **H04N 9/79, H04N 9/83**

(21) Application number: **86309322.5**

(22) Date of filing: **28.11.86**

(54) **Apparatus for recording a video signal on a recording medium.**

(30) Priority: **05.12.85 JP 274178/85**

(43) Date of publication of application:
**24.06.87 Bulletin  87/26**

(45) Publication of the grant of the patent:
**22.07.92 Bulletin  92/30**

(84) Designated Contracting States:
**DE FR GB NL**

(56) References cited:
**DE-A- 3 425 042**
**US-A- 3 830 968**
**US-A- 4 051 533**

(73) Proprietor: **SONY CORPORATION**
**7-35 Kitashinagawa 6-chome Shinagawa-ku**
**Tokyo 141(JP)**

(72) Inventor: **Tsusue, Yoichi Patents Division**
**Sony Corporation**
**6-7-35 Kitashinagawa Shinagawa-ku**
**Tokyo 141(JP)**
Inventor: **Goto, Koichi Patents Division Sony**
**Corporation**
**6-7-35 Kitashinagawa Shinagawa-ku**
**Tokyo 141(JP)**

(74) Representative: **Cotter, Ivan John et al**
**D. YOUNG & CO. 10 Staple Inn**
**London WC1V 7RD(GB)**

## Description

This invention relates to apparatus for recording a video signal on a record medium.

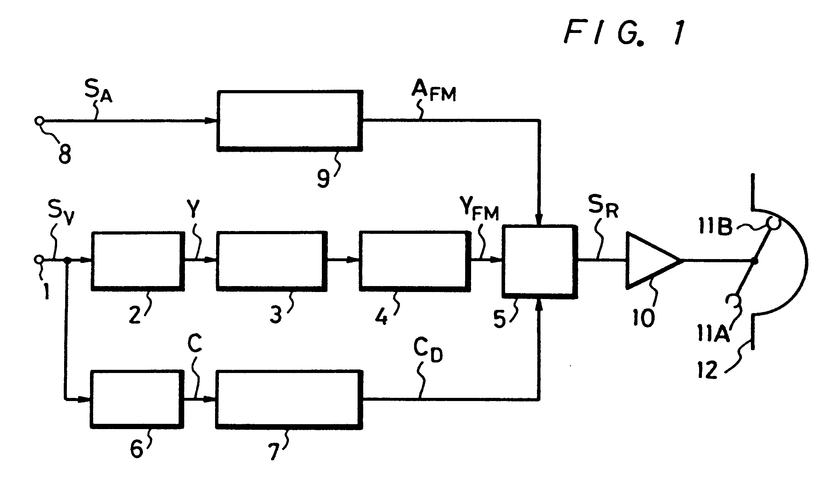

A recording apparatus or system of a previously proposed video tape recorder (VTR) as disclosed e.g. in DE-A-3 425042 according to the precharacterizing part of claim 1 will now be described with reference to Figure 1 of the accompanying drawings. As shown in Figure 1, a video signal $S_V$ is applied to an input terminal 1 from which it is supplied to a low pass filter 2 which separates a luminance signal component Y from the video signal $S_V$. The luminance signal component Y is emphasised, in its high frequency band, by a pre-emphasis circuit 3, and then fed to a frequency modulating circuit or frequency modulator 4 in which it is frequency modulated such that, for example, the white peak level becomes 5.4 MHz and the sync. chip level becomes 4.2 MHz. A frequency-modulated luminance signal $Y_{FM}$ from the frequency modulating circuit 4 is supplied to an adding or composing circuit 5.

The video signal $S_V$ applied to the terminal 1 also is supplied to a band pass filter 6 which separates a chrominance signal component C from the video signal. The chrominance signal component C is supplied to a chrominance signal processing circuit 7 in which the chrominance signal component C is frequency converted and subjected to other signal processing to provide a low frequency converted chrominance signal $C_D$ whose colour sub-carrier frequency is, for example, converted to 743 kHz. The low frequency converted chrominance signal $C_D$ also is supplied to the adding circuit 5.

Further, an audio signal $S_A$ is applied to a terminal 8 and is supplied therefrom to an audio signal processing circuit 9. The audio signal processing circuit 9 effects signal processing, such as frequency modulation, of the audio signal $S_A$ and generates a frequency-modulated audio signal $A_{FM}$ whose carrier frequency is converted to, for example, 1.5 MHz. The frequency-modulated audio signal $A_{FM}$ also is supplied to the adding circuit 5.

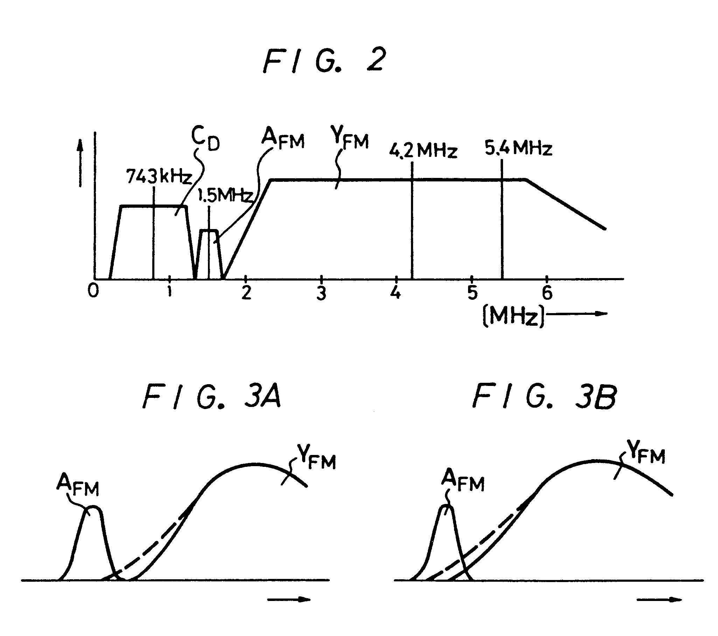

A composite signal $S_R$, which has a frequency spectrum as shown in Figure 2 of the accompanying drawings and which is composed of the frequency-modulated luminance signal $Y_{FM}$, the low frequency converted chrominance signal $C_D$ and the frequency-modulated audio signal $A_{FM}$, is derived from the adding circuit 5. The composite signal $S_R$ is supplied through a recording amplifier 10 to rotary magnetic heads 11A and 11B which operate alternately to record the composite signal $S_R$ in successive oblique tracks on a magnetic tape 12.

In the above-described previously proposed recording apparatus, if the low frequency components of the frequency-modulated luminance signal $Y_{FM}$ are emphasised, the resolution is increased and the picture quality thus can be improved. However, if the low frequency components of the frequency-modulated luminance signal $Y_{FM}$ are emphasised at all times, for example as disclosed in Japanese Published Patent Application No 47-137, there is a danger that this emphasis will exert an adverse influence on the adjacent frequency-modulated audio signal $A_{FM}$ whereby the tone quality will be deteriorated. For example, if the video signal $S_V$ is generated by a home video camera and has a relatively narrow frequency band, the relationship between the frequency-modulated luminance signal $Y_{FM}$ and the frequency-modulated audio signal $A_{FM}$ is as shown by a solid line in Figure 3A of the accompanying drawings. In that case, if low frequency components of the frequency-modulated luminance signal $Y_{FM}$ are emphasised, as shown by a broken line in Figure 3A, the level of the emphasised frequency modulated luminance signal $Y_{FM}$ in the frequency band of the frequency-modulated audio signal $A_{FM}$ is low so that no trouble will result therefrom. However, if the video signal $S_V$ is an output from, for example, a television tuner, a video disc reproducing apparatus or the like and the frequency band thereof is relatively wide, the relationship between the frequency-modulated luminance signal $Y_{FM}$ and the frequency-modulated audio signal $A_{FM}$ is as shown by a solid line in Figure 3B of the accompanying drawings. Accordingly, if low frequency components of the frequency-modulated luminance signal $Y_{FM}$ are emphasised, as shown by a broken line in Figure 3B, the level of the frequency component of the frequency-modulated luminance signal $Y_{FM}$ in the frequency band of the frequency-modulated audio signal $A_{FM}$ is relatively high, which exerts an adverse influence upon the frequency-modulated audio signal $A_{FM}$ whereby the tone quality is deteriorated.

According to the present invention there is provided apparatus for recording a video signal on a record medium, the apparatus comprising: means for separating luminance and chrominance signal components from a video signal;
frequency modulating means for receiving the separated luminance signal component and providing a frequency-modulated luminance signal; characterized by equaliser means for receiving the frequency-modulated luminance signal and emphasising low frequency components thereof to provide an equalised frequency-modulated luminance signal;
selecting means for selecting, as a luminance signal to be recorded, the frequency-modulated luminance signal from the frequency modulating means or the equalised frequency-modulated luminance signal from the equaliser means; and recording means for recording on a record medium the luminance signal which is selected to be recorded.

A preferred form of recording apparatus embodying the invention and described hereinbelow enables the above-described disadvantage or problem associated with the previous proposal to be avoided or at least alleviated. The preferred apparatus records a video signal on a record medium in such a way that the resolution can be increased considerably so as thereby to improve the quality of the picture.

Preferably, the selecting means of the apparatus is controlled so as to select the equalised frequency-modulated luminance signal from the equaliser means when the video signal is supplied from a television camera, and to select the frequency-modulated luminance signal from the frequency modulating means when the video signal is supplied from a television tuner or a video signal reproducing apparatus.

The invention will now be further described, by way of illustrative and non-limiting example, with reference to the accompanying drawings, in which like references designate like elements and parts throughout, and in which:

Figure 1 is a block diagram showing a recording apparatus or system of a previously proposed video tape recorder;

Figure 2 is a diagram showing the frequency spectrum of a composite signal which is recorded in the apparatus shown in Figure 1;

Figures 3A and 3B are schematic diagrams to which reference is made in explaining a problem associated with the apparatus shown in Figure 1;

Figure 4 is a block diagram showing an apparatus embodying the present invention for recording a video signal on a record medium; and

Figure 5 is a circuit diagram showing details of a circuit that may form a main portion of the apparatus shown in Figure 4.

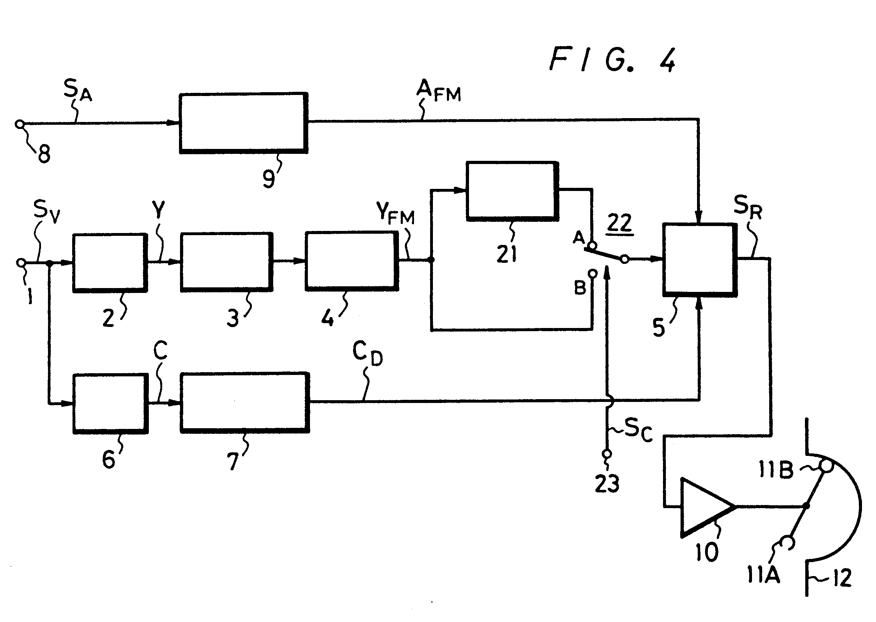

Referring to Figure 4, in which elements and parts corresponding to those described above with reference to Figure 1 are identified by the same references, it will be seen that the frequency-modulated luminance signal $Y_{FM}$ from the frequency modulating circuit 4 is supplied through an equaliser or equalising circuit 21 to a fixed contact A of a switching circuit 22. The equaliser circuit 21 is arranged to emphasise the low frequency components of the frequency-modulated luminance signal $Y_{FM}$. Further, the frequency-modulated luminance signal $Y_{FM}$ from the frequency modulating circuit 4 is supplied directly to a fixed contact B of the switching circuit 22. An output of the switching circuit 22, which is derived from a movable contact which can engage with the fixed contact A or the fixed contact B, is supplied to the adding circuit 5 as the luminance signal to be recorded. The other circuit components shown in Figure 4 are similar to those described with reference to Figure 1.

A switching control signal $S_C$ from a terminal 23 is supplied to the switching circuit 22 for controlling the switching circuit. The level of the control signal $S_C$ is high or "1" in a television camera recording mode, that is when the video signal $S_V$ applied to the terminal 1 is derived from, for example, a home video camera, and the level of the control signal $S_C$ is low or "0" in a so-called "line recording" mode, that is when the video signal $S_V$ is supplied from, for example, a television tuner, a video disc reproducing apparatus or the like. The movable contact of the switching circuit 22 is engaged with the fixed contact A in the television camera recording mode (in which the level of the signal $S_C$ is high or "1") and is engaged with the fixed contact B in the line recording mode (in which the level of the signal $S_C$ is low or "0").

In the television camera recording mode, the video signal $S_V$ applied to the terminal 1 has a relatively narrow frequency band, for example when the signal $S_V$ is generated by a home video camera, and the level of the signal $S_C$ supplied from the terminal 23 to the switching circuit 22 is high or "1" so that the movable contact of the switching circuit 22 engages the fixed contact A. Therefore, the equaliser circuit 21 is connected between the frequency modulating circuit 4 and the adding circuit 5. Accordingly, the low frequency components of the frequency-modulated luminance signal $Y_{FM}$ are emphasised, as indicated by the broken line in Figure 3A, to thereby increase the resolution and improve the quality of the picture.

On the other hand, in the "line recording" mode, in which the video signal $S_V$ applied to the terminal 1 has a relatively wide frequency band and is derived from, for example, a television tuner, video disc reproducing apparatus or the like, the level of the signal $S_C$ supplied to the switching circuit 22 from the terminal 23 is low or "0" so that the movable contact of the switching circuit 22 engages the fixed contact B. Thus, the frequency-modulated luminance signal $Y_{FM}$ is passed directly from the frequency modulating circuit 4 through the switching circuit 22 to the adding circuit 5 without being emphasised in the equaliser circuit 21. Accordingly, the low frequency components of the frequency-modulated luminance signal $Y_{FM}$ are not emphasised, which avoids exerting an adverse influence on the frequency-modulated audio signal $A_{FM}$. Thus, deterioration of the tone quality can be avoided.

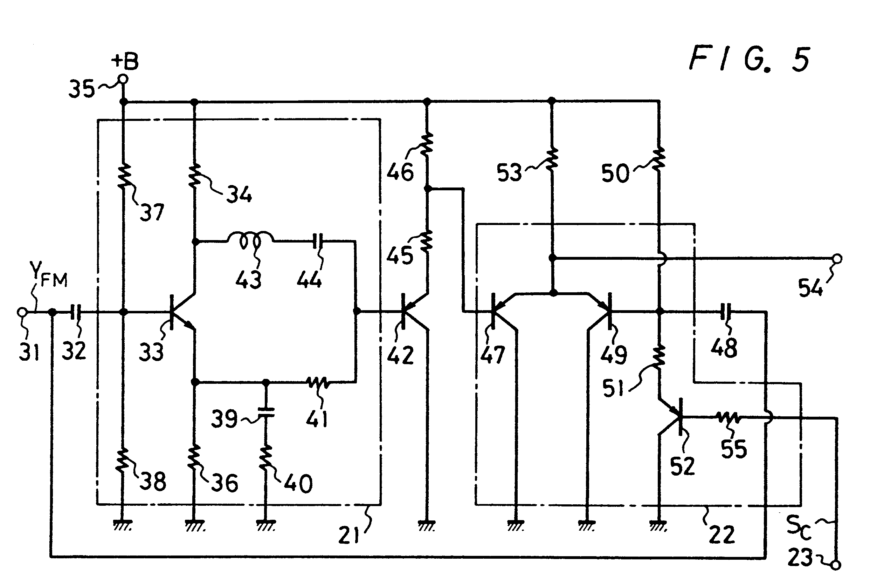

A circuit arrangement for the equaliser circuit 21 and the switching circuit 22 of the embodiment of Figure 4 is shown in Figure 5. The frequency-modulated luminance signal $Y_{FM}$ from the frequency modulating circuit 4 is supplied to a terminal 31 and is supplied from there, through a capacitor 32, to the base of an npn transistor 33 of the equaliser circuit 21. The collector of the transistor 33 is connected through a resistor 34 to a power source terminal 35 to which a positive dc voltage +B is applied, and the emitter of the transistor 33 is earthed or grounded through a resistor 36. A series circuit of resistors 37 and 38 is connected between the power source terminal 35 and earth. A voltage obtained at the junction between the resistors 37 and 38 is applied to the base of the transistor 33 as a dc bias voltage.

The junction between the emitter of the transistor 33 and the resistor 36 is earthed through a series circuit of a capacitor 39 and a resistor 40 and also is connected through a resistor 41 to the base of a pnp transistor 42. The junction between the collector of the transistor 33 and the resistor 34 is connected through a series resonant circuit, comprising a winding 43 and a capacitor 44, to the base of the transistor 42. Thus, in the circuit arrangement of Figure 5, the frequency-modulated luminance signal $Y_{FM}$, which has had its low frequency components emphasised by the equaliser circuit 21, is applied to the base of the transistor 42.

The collector of the transistor 42 is earthed and the emitter of the transistor 42 is connected through a series circuit comprising resistors 45 and 46 to the power source terminal 35. The junction between the resistors 45 and 46 is connected to the base of a pnp transistor 47 of the switching circuit 22. The collector of the transistor 47 is earthed.

The frequency-modulated luminance signal $Y_{FM}$ from the terminal 31 is supplied through a capacitor 48 to the base of a pnp transistor 49 whose collector is earthed. A series circuit comprising resistors 50, 51 and a pnp transistor 52 is connected between the power source terminal 35 and earth. A voltage obtained at the junction between the resistors 50 and 51 is applied to the base of the transistor 49 as a dc bias voltage.

The emitters of the transistors 47 and 49 are connected together and are connected to the power source terminal 35 through a resistor 53. A terminal 54, at which the frequency-modulated luminance signal $Y_{FM}$, which is fed to the succeeding adding circuit 5, is derived, is connected to the junction between the emitters of the transistors 47 and 49.

The switch control signal $S_C$ is supplied to the base of the transistor 52 from the terminal 23 through a resistor 55.

With the circuit arrangement of Figure 5, in the video camera recording mode the level of the signal $S_C$ becomes high or "1" so that the transistors 52 and 49 are turned off while the transistor 47 is turned on. Accordingly, the frequency-modulated luminance signal $Y_{FM}$, whose low frequency components have been emphasised by the equaliser circuit 21, is delivered through the transistor 47 to the terminal 54. On the other hand, in the so-called "line recording" mode, the level of the signal $S_C$ is low or "0" so that the transistors 52 and 49 are turned on while the transistor 47 is turned off. Accordingly, the frequency-modulated luminance signal $Y_{FM}$ from the terminal 31 is delivered through the transistor 49 to the terminal 54 without emphasis of its low frequency components.

In the above-described embodiment of the invention, in the video camera recording mode, the equaliser circuit 21 is in effect connected at the rear of the frequency modulating circuit 4, while, in the line recording mode, the equaliser circuit 21 is, in effect, disconnected from the frequency modulating circuit 4. In short, the equaliser circuit 21 is operative on the output of the frequency modulating circuit 4 only when the frequency band of the video signal $S_V$ is relatively narrow so that the low frequency components of the frequency-modulated luminance signal $Y_{FM}$ can be emphasised without adversely affecting signals of adjacent frequency, such as the frequency-modulated audio signal $A_{FM}$.

Although, in the above-described embodiment, the audio signal $S_A$ is frequency-modulated, frequency-multiplexed with the video signal and then recorded in an oblique track on the magnetic tape, the present invention can be similarly applied to other video signal recording schemes.

According to the embodiment of the present invention set forth above, since a low frequency component or components of the frequency-modulated luminance signal is or is not emphasised in accordance with the frequency band of the video signal to be recorded, the resolution can be increased without difficulty and, therefore, the quality of the picture can be improved.

**Claims**

1.  Apparatus for recording a video signal on a record medium, the apparatus comprising:
    means (2, 6) for separating luminance and chrominance signal components (Y, C) from a video signal ($S_V$);
    frequency modulating means (4) for receiving the separated luminance signal component (Y) and providing a frequency-modulated luminance signal ($Y_{FM}$); characterized by
    equaliser means (21) for receiving the frequency-modulated luminance signal ($Y_{FM}$) and emphasising low frequency components thereof to provide an equalised frequency-modulated luminance signal;

selecting means (22) for selecting, as a luminance signal to be recorded, the frequency-modulated luminance signal ($Y_{FM}$) from the frequency modulating means (4) or the equalised frequency-modulated luminance signal from the equaliser means (21); and

recording means (10, 11A, 11B) for recording on a record medium the luminance signal which is selected to be recorded.

2. Apparatus according to claim 1, comprising frequency converting means (7) for frequency-converting the separated chrominance signal (C) and adding means (5) for adding the selected luminance signal from the selecting means (22) to the chrominance signal (C) from the frequency converting means (7), the adding means (5) being connected between the selecting means (22) and the recording means (10, 11A, 11B).

3. Apparatus according to claim 2, in which the recording means (10, 11A, 11B) is capable of effecting recording on a record medium in the form of a magnetic tape (12).

4. Apparatus according to claim 3, in which the recording means comprises a recording amplifier (10) for amplifying an output of the adding means (5) and a pair of rotary magnetic heads (11A, 11B) for recording an output signal from the amplifier (10) in oblique tracks on a magnetic tape (12).

5. Apparatus according to claim 2, claim 3 or claim 4, in which the selecting means comprises a switching circuit (22) controllable by a switching signal ($S_C$).

6. Apparatus according to claim 5, in which the switching circuit (22) is controllable so as to select the equalised frequency-modulated luminance signal from the equaliser means (21) when the video signal ($S_V$) is supplied from a television camera, and to select the frequency-modulated luminance signal ($Y_{FM}$) from the frequency modulating means (4) when the video signal ($S_V$) is supplied from a television tuner or a video signal reproducing apparatus.

7. Apparatus according to claim 5, comprising an audio signal processing circuit (9) for receiving an audio signal ($S_A$) corresponding to the video signal ($S_V$), the audio signal processing circuit (9) having an output connected to the adding means (5).

8. Apparatus according to claim 7, in which the audio signal processing circuit (9) is operative to frequency modulate the audio signal ($S_A$).

9. Apparatus according to any one of the preceding claims, in which the means (2, 6) for separating the luminance and chrominance signal components (Y, C) from the video signal ($S_V$) comprises a low pass filter (2) for separating the luminance signal component (Y) and a band pass filter (6) for separating the chrominance signal component (C).

10. Apparatus according to claim 9, comprising pre-emphasis circuit means (3) connected between the low pass filter (2) and the frequency modulating means (4) for the separated luminance signal component (Y).

**Revendications**

1. Dispositif pour l'enregistrement d'un signal vidéo sur un support d'enregistrement, ce dispositif comprenant :

des moyens (2, 6) destinés à séparer des composantes de signal de luminance et de chrominance (Y, C) d'un signal vidéo ($S_V$); et

des moyens de modulation de fréquence (4) destinés à recevoir la composante de signal de luminace séparée (Y) et à fournir un signal de luminance modulé en fréquence ($Y_{FM}$); caractérisé par

des moyens égaliseurs (21) destinés à recevoir le signal de luminance modulé en fréquence ($Y_{FM}$) et à accentuer ses composantes de fréquence basse pour fournir un signal de luminance modulé en fréquence égalisé;

des moyens de sélection (22) destinés à sélectionner, à titre de signal de luminance à enregistrer, le signal de luminance modulé en fréquence ($Y_{FM}$) provenant des moyens de modulation de fréquence (4) ou le signal de luminance modulé en fréquence égalisé provenant des moyens égaliseurs (21); et

des moyens d'enregistrement (10, 11A, 11B) destinés à enregistrer sur un support d'enregistrement le signal de luminance qui est sélectionné pour être enregistré.

2. Dispositif selon la revendication 1, comprenant des moyens de conversion de fréquence (7) destinés à transposer en fréquence le signal de chrominance séparé (C) et des moyens d'addition (5) destinés à additionner le signal de luminance sélectionné provenant des moyens de sélection (22) et le signal de chrominance (C) provenant des moyens de conversion de fréquence (7), les moyens d'addition (5) étant connectés entre les moyens de sélection (22) et les moyens d'enregistrement (10, 11A, 11B).

3. Dispositif selon la revendication 2, dans lequel les moyens d'enregistrement (10, 11A, 11B) sont capables d'effectuer l'enregistrement sur un support d'enregistrement se présentant sous la forme d'une bande magnétique (12).

4. Dispositif selon la revendication 3, dans lequel les moyens d'enregistrement comprennent un amplificateur d'enregistrement (10) qui est destiné à amplifier un signal de sortie des moyens d'addition (5) et une paire de têtes magnétiques tournantes (11A, 11B) qui sont destinées à enregistrer un signal de sortie de l'amplificateur (10) dans des pistes obliques sur une bande magnétique (12).

5. Dispositif selon la revendication 2, la revendication 3 ou la revendication 4, dans lequel les moyens de sélection comprennent un circuit de commutation (22) qui peut être commandé par un signal de commutation ($S_C$).

6. Dispositif selon la revendication 5, dans lequel le circuit de commutation (22) peut être commandé de façon à sélectionner le signal de luminance modulé en fréquence égalisé provenant des moyens égaliseurs (21) lorsque le signal vidéo ($S_V$) est fourni par une caméra de télévision, et à sélectionner le signal de luminance modulé en fréquence ($Y_{FM}$) provenant des moyens de modulation de fréquence (4) lorsque le signal vidéo ($S_V$) est fourni par un étage amplificateur-sélecteur de récepteur de télévision ou par un dispositif de reproduction de signal vidéo.

7. Dispositif selon la revendication 5, comprenant un circuit de traitement de signal audio (9) qui est destiné à recevoir un signal audio ($S_A$) correspondant au signal vidéo ($S_V$), le circuit de traitement de signal audio (9) ayant une sortie connectée aux moyens d'addition (5).

8. Dispositif selon la revendication 7, dans lequel le circuit de traitement de signal audio (9) module en fréquence le signal audio ($S_A$).

9. Dispositif selon l'une quelconque des revendications précédentes, dans lequel les moyens (2, 6) destinés à séparer les composantes de signal de luminance et de chrominance (Y, C) du signal vidéo ($S_V$), comprennent un filtre passe-bas (2) qui est destiné à séparer la composante de signal de luminance (Y) et un filtre passe-bande (6) qui est destiné à séparer la composante de signal de chrominance (C).

10. Dispositif selon la revendication 9, comprenant un circuit de préaccentuation (3) connecté entre le filtre passe-bas (2) et les moyens de modulation de fréquence (4) pour la composante de signal de luminance séparée (Y).

**Patentansprüche**

1. Vorrichtung zum Aufzeichnen eines Videosignals auf einem Aufzeichnungsmedium, wobei die Vorrichtung umfaßt:
Mittel (2,6) zum Trennen der Luminanz- und Chrominanzsignalkomponenten (Y,C) von einem Videosignal (SV);
Mittel (4) zur Frequenzmodulation zum Empfang der getrennten Luminanzsignalkomponente (Y) und zum Vorsehen eines frequenzmodulierten Luminanzsignals ($Y_{FM}$); gekennzeichnet durch Entzerrungsmittel (21) zum Empfang des frequenzmodulierten Luminanzsignals ($Y_{FM}$) und zum Anheben der niedrigen Frequenzkomponenten daraus, um ein entzerrtes frequenzmoduliertes Luminanzsignal zu liefern; Auswahlmittel (22) zur Auswahl als aufzuzeichnendes Luminanzsignal des frequenzmodulierten Luminanzsignals ($Y_{FM}$) von den Mitteln (4) zur Frequenzmodulation oder des entzerrten frequenzmodulierten Luminanzsignals von den Entzerrungsmitteln (21); und Aufzeichnungsmittel (10,11A,11B) zum Aufzeichnen des Luminanzsignals, welches zum Aufzeichnen ausgewählt ist auf einem Aufzeichnungsmedium.

2. Vorrichtung nach Anspruch 1, mit Frequenzkonvertierungsmitteln (7) zum Konvertieren der Frequenz des getrennten Chrominanzsignals (C) und Addiermitteln (5) zum Addieren des von den Auswahlmitteln (22) ausgewählten Luminanzsignals mit dem Chrominanzsignal (C) aus den Konvertierungsmitteln (7), wobei die Addiermittel (5) mit den Auswahlmitteln (22) und den Aufzeichnungsmitteln (11,11A,11B) verbunden sind.

3. Vorrichtung nach Anspruch 2, bei welcher die Aufzeichnungsmittel (10,11A,11B) das Aufzeichnen auf einem Aufzeichnungsmedium in Form eines Magnetbandes (27) ausführen können.

4. Vorrichtung nach Anspruch 3, bei welcher die Aufzeichnungsmittel einen Aufzeichnungsverstärker (10) zum Verstärken eines Ausgangssignals der Addiermittel (5) und ein Paar von rotierenden Magnetköpfen (11A,11B) zum Aufzeichnen eines Ausgangssignals des Verstärkers (10) auf schräge Spuren eines Magnetbandes (12) umfassen.

5. Vorrichtung nach Anspruch 2, 3 oder 4, bei welcher die Auswahlmittel einen Schaltkreis (22) umfassen, der durch ein Schaltsignal ($S_C$) steuerbar ist.

6. Vorrichtung nach Anspruch 5, bei welcher der Schaltkreis (22) so steuerbar ist, daß er das entzerrte frequenzmodulierte Luminanzsignal der Entzerrungsmittel (21) auswählt, wenn das Videosignal ($S_V$) von einer Fernsehkamera geliefert wird, und daß er das frequenzmodulierte Luminanzsignal ($Y_{FM}$) von den Mitteln (4) zur Frequenzmodulation auswählt, wenn das Videosignal ($S_V$) von einem Fernsehtuner oder einer das Videosignal reproduzierenden Vorrichtung geliefert wird.

7. Vorrichtung nach Anspruch 5, mit einer das Audiosignal verarbeitenden Schaltung (9) zum Empfang eines Audiosignals ($S_A$), das dem Videosignal ($S_V$) entspricht, wobei die das Audiosignal verarbeitende Schaltung (9) einen Ausgang hat, der mit den Addiermitteln (5) verbunden ist.

8. Vorrichtung nach Anspruch 7, bei welcher die das Audiosignal verarbeitende Schaltung (9) das Audiosignal ($S_A$) frequenzmodulieren kann.

9. Vorrichtung nach einem der vorhergehenden Ansprüche, bei welcher die Mittel (2,6) zur Trennung der Luminanz- und Chrominanzsignalkomponenten (Y,C) von dem Videosignal ($S_V$) ein Tiefpaßfilter (2) zur Trennung der Luminanzsignalkomponente (Y) und ein Bandpaßfilter (6) zur Trennung der Chrominanzsignalkomponente (C) umfassen.

10. Vorrichtung nach Anspruch 9, die Schaltmittel (3) zur Voranhebung umfaßt, die zwischen dem Tiefpaßfilter (2) und den Mitteln zur Frequenzmodulation (4) für die getrennte Luminanzsignalkomponente (Y) angeschlossen sind.

F I G. 1

EP 0 226 371 B1

EP 0 226 371 B1

# F I G. 2

# F I G. 3A

# F I G. 3B

F I G. 4

FIG. 5

EP 0 226 371 B1